# EUROPÄISCHE PATENTSCHRIFT

(11) **EP 0 822 633 B1**
(45) Veröffentlichungstag und Bekanntmachung des Hinweises auf die Patenterteilung: **29.09.1999**
(21) Anmeldenummer: 97401408.6
(22) Anmeldetag: 19.06.1997
(51) Int. Cl.: H02G 3/06, H01R 13/52, H01R 9/05, H02G 15/08

(54) **Anordnung zum Einführen des Endes einer geschirmten elektrischen Leitung in ein metallisches Gehäuse**
Device for engaging the end of a schielded electrical cable in a metallic housing
Dispositif pour insérer l'extrémité d'un câble électrique blindé dans un bôitier métallique

(30) Priorität: 02.08.1996 DE 19631300
(43) Veröffentlichungstag der Anmeldung: 04.02.1998
(73) Patentinhaber: ALCATEL, 75008 Paris (FR)
(72) Erfinder: Schauer, Friedrich, 90562 Heroldsberg (DE); Czeschka, Martin, 91177 Thalmässing (DE)
(74) Vertreter: Döring, Roger, Dipl.-Ing.

(56) Entgegenhaltungen:
- GB-A- 715 649
- US-A- 3 197 730
- US-A- 3 601 524

## Beschreibung

Die Erfindung bezieht sich auf eine Anordnung zum Einführen des Endes einer geschirmten elektrischen Leitung in ein metallisches Gehäuse, welche mindestens eine aus einem isolierten elektrischen Leiter bestehende Ader, einen die Ader umgebenden, flexiblen metallischen Schirm und einen darüber liegenden Mantel aus Isoliermaterial aufweist, bei welcher der vom Mantel befreite Schirm an einem metallischen Klemmstück festgelegt ist, das elektrisch gut leitenden Kontakt mit dem Gehäuse hat, bei welcher das metallische Klemmstück innerhalb des Gehäuses angeordnet ist, in welchem der abisolierte Leiter der vom Mantel befreiten Ader an einer Kontaktstelle an ein im Gehäuse befindliches Bauteil angeschlossen ist, bei welcher die Ader einschließlich Leiter und Kontaktstelle sowie die im Gehäuse liegenden Teile des Klemmstücks mit eingeklemmtem Schirm in einen Isolierkörper eingebettet sind und bei welcher um das Ende des Gehäuses ein durch Spritzgießen erzeugter Schutzkörper aus Isoliermaterial herumgeformt ist, der sich bis über die Leitung erstreckt (GB-A-715 649).

Geschirmte elektrische Leitungen werden dort eingesetzt, wo eine störungsfreie Signalübertragung erforderlich ist. Sie dienen beispielsweise zum Anschluß an elektronische Geräte, wie Oszillagraphen, Meßgeräte oder Steuergeräte. Sie können aber auch an beliebige Sensoren angeschlossen werden, die in metallischen Gehäusen angeordnet sind. Der Schirm der Leitungen muß dabei nicht nur im gesamten Leitungsverlauf, sondern insbesondere an der Einführungsstelle in das entsprechende Gerät einwandfrei ausgeführt sein. Dabei muß auch ein sicherer elektrischer Anschluß des Schirms am Gehäuse des jeweiligen Geräts gewährleistet sein. Außerdem ist eine feuchtigkeitsdichte Verbindung von Leitung und Gehäuse erforderlich.

Bei der bekannten Anordnung nach der DE 32 42 073 C2 ist der Schirm der Leitung mit einer Quetschhülse an einem metallischen Rohrstück festgelegt, das mehrere Adern der Leitung umschließt und an seinem freien Ende ein Gewinde hat. Das Rohrstück kann durch eine Öffnung in einer Wand eines metallischen Gehäuses gesteckt und mit derselben verschraubt werden. Der Kontakt zwischen Schirm und Gehäuse ist nach der Verschraubung hergestellt. Das Ende der Leitung ist in einen gespritzten Isolierkörper eingebettet. Zum feuchtigkeitsdichten Anschluß der Leitung an das Gehäuse ist ein O-Ring eingesetzt. Damit ist die Einführungsstelle der Leitung in das Gehäuse wirksam gegen Feuchtigkeit geschützt. Bei einer Beschädigung des Mantels der Leitung in dieselbe eindringende Feuchtigkeit kann jedoch in das Gehäuse hineingelangen.

Aus der eingangs erwähnten GB-A-715 649 geht eine Anordnung zur Herstellung elektrischer Kupplungen hervor, die feuchtigkeitsdicht am Ende einer geschirmten elektrischen Leitung angebracht sind. Der Schirm der Leitung ist radial nach außen abgebogen und in einem Klemmkörper festgelegt. Das Leitungsende ist einschließlich Klemmkörper in einen Isolierkörper eingebettet, der sich bis über eine die Leitung umgebende Hülse des Klemmkörpers erstreckt. Über dem Isolierkörper ist ein metallisches Gehäuse angebracht, das mit dem Klemmkörper verschraubt ist. Das Gehäuse ist von einem aus Isoliermaterial bestehenden Schutzkörper umgeben, der sich unter Einschluß eines Ringspalts bis über die Leitung erstreckt.

Der Erfindung liegt die Aufgabe zugrunde, die eingangs geschilderte Anordnung so weiterzubilden, daß an der Einführungsstelle der Leitung in das Gehäuse der elektrisch gut leitende Kontakt zwischen Schirm und Gehäuse verbessert ist.

Diese Aufgabe wird gemäß der Erfindung dadurch gelöst,
- daß das metallische Klemmstück an der Stelle seiner größten radialen Abmessung mit seiner Umfangsfläche rundum dicht am Gehäuse anliegt und
- daß der Schutzkörper mit dem Mantel der Leitung verschweißt ist.

Diese Anordnung gewährleistet einen völlig feuchtigkeitsdichten Anschluß einer geschirmten elektrischen Leitung an ein metallisches Gehäuse sowie eine wirksame Durchverbindung des Schirms der Leitung. Der äußere, mit dem Mantel der Leitung verschweißte Schutzkörper dichtet die Verbindungsstelle von Leitung und Gehäuse von außen ab. Eventuell in das Innere der Leitung eingedrungene Feuchtigkeit kann nicht in das Gehäuse gelangen. Sie wird durch den Ader und Schirm umschließenden Isolierkörper abgeblockt. Der Schirm der Leitung ist durch das Klemmstück gut leitend durchverbunden, das innen am metallischen Gehäuse anliegt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 in schematischer Darstellung eine Anordnung nach der Erfindung.

Fig. 2 und 3 einen Ausschnitt aus Fig. 1 in zwei unterschiedlichen Schnittbildern in vergrößerter Darstellung.

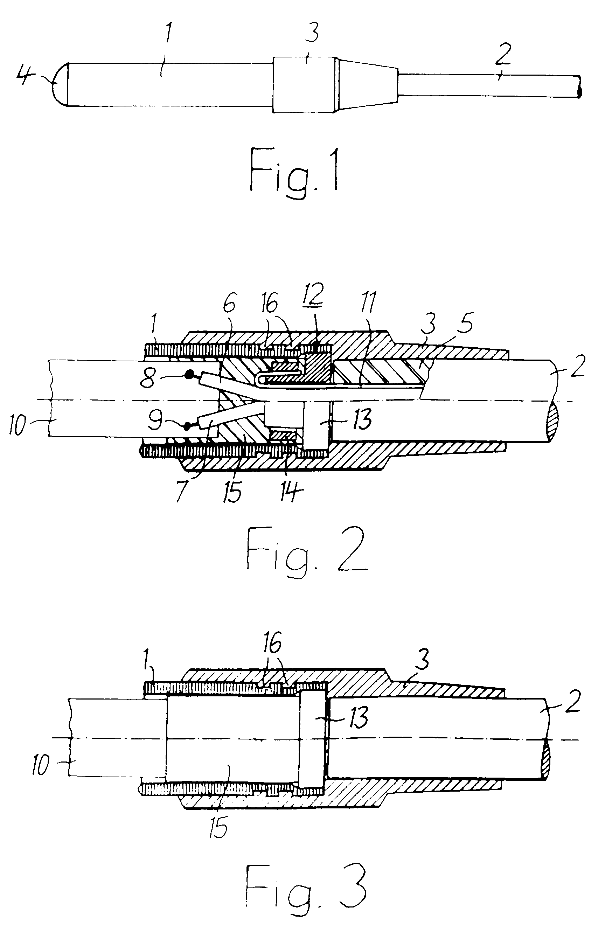

In Fig. 1 ist ein rohrförmiges, metallisches Gehäuse 1 dargestellt, in das an einem Ende eine geschirmte elektrische Leitung 2 eingeführt ist. Dieses Ende des Gehäuses 1 ist von einem Isolierkörper 3 umgeben, der sich bis über die Leitung 2 erstreckt. Am anderen Ende des Gehäuses 1 ist beispielsweise ein Sensor 4 angebracht, der unter Zwischenschaltung von elektrischen bzw. elektronischen Bauteilen mit der Leitung 2 verbunden ist. Die Leitung 2 hat mindestens eine aus einem isolierten Leiter bestehende, von einem Mantel 5 (Fig. 2) umgebene Ader. Vorzugsweise sind in der Leitung 2 mehrere Adern angeordnet.

Bei dem aus den Fig. 2 und 3 ersichtlichen Ausführungsbeispiel hat die Leitung 2 zwei Adern 6 und 7. Ihre abisolierten Leiter sind an Kontaktstellen 8 und 9 mit einem Bauteil 10 verbunden, bei dem es sich beispielsweise um eine mit Leiterbahnen und elektronischen Komponenten bestückte Leiterkarte handelt. Der nach dem Entfernen des Mantels 5 der Leitung 2 freigelegte Schirm 11 derselben ist zurückgebogen und in einem metallischen Klemmstück 12 festgelegt. Das Klemmstück 12 besteht aus einem Grundkörper 13 mit einem konischen Ansatz und einem Ring 14, zwischen denen der Schirm 11 eingeklemmt ist. Der Grundkörper 13 hat die größte radiale Abmessung des Klemmstücks 12. Er liegt fest am Gehäuse 1 an. Dabei ist die innere geometrische Form des Gehäuses 1 gleich der äußeren geometrischen Form des Grundkörpers 13. Bei einem kreisrunden Gehäuse 1 ist also der Grundkörper 13 zylindrisch. Die Adern 6 und 7, die Kontaktstellen 8 und 9, das umgebogene Ende des Schirms 11 und das Klemmstück 12 im Bereich seines Ringes 14 sind in einen Isolierkörper 15 eingebettet. Der Schirm 11 ist in bevorzugter Ausführungsform ein Geflecht aus Kupferdrähten.

Der vorzugsweise aus einem Gießharz, wie Polyurethan, bestehende Isolierkörper 15 ist so bemessen, daß er ohne Schwierigkeiten in das Gehäuse 1 eingeführt werden kann. Zur Berücksichtigung von eventuellen Wärmedehnungen bei erhöhten Temperaturen sind die Außenabmessungen des lsolierkörpers 15 kleiner als die lichten Abmessungen des Gehäuses 1. Der Isolierkörper 15 ist in Fig. 3 ungeschnitten dargestellt. Die Umfangsfläche des Klemmstücks 12 mit dem größten Durchmesser, das ist die Umfangsfläche des Grundkörpers 13, ist frei vom Material des Isolierkörpers 15 und damit metallisch blank. Sie liegt bei fertig montierter Anordnung fest am Gehäuse 1 an und stellt dadurch einen elektrisch gut leitenden Kontakt zu demselben her. Der Schirm 11 ist dadurch elektrisch gut leitend mit dem Gehäuse 1 verbunden. Am Gehäuse 1 kann außen mindestens eine umlaufende Sicke 16 angebracht sein, durch welche die Verbindung zwischen Schutzkörper 3 und Gehäuse 1 verbessert wird. Im dargestellten Ausführungsbeispiel sind es zwei Sicken 16.

Die in den Fig. 1 bis 3 dargestellte Anordnung wird beispielsweise wie folgt hergestellt:

Am Ende der elektrischen Leitung 2 wird der Mantel 5 auf einer vorgegebenen Länge entfernt. Auf den dadurch freigelegten Schirm 11 wird der Grundkörper 13 des Klemmstücks 12 aufgeschoben. Das Ende des Schirms 11 wird dann bis zur Anlage am konischen Ansatz des Grundkörpers 13 zurückgebogen und dort durch den Ring 14 festgeklemmt.

Danach werden die Leiter der Adern 6 und 7 abisoliert und an den Kontaktstellen 8 und 9 mit dem Bauteil 10 elektrisch leitend verbunden. Um das so vorbereitete Leitungsende mit Klemmstück 12 und Bauteil 10 wird der Isolierkörper 15 herumgeformt. Dazu wird um das Leitungsende beispielsweise ein als Formbegrenzung dienendes Formteil herum angeordnet, das mit einem Ende am Grundkörper 13 des Klemmstücks 12 anliegt. Die so hergestellte Form wird dann in vertikaler Position mit Isoliermaterial, beispielsweise mit Polyurethan, gefüllt, bis der gesamte, vom Schlauchstück umschlossene Raum aufgefüllt ist. Wenn das Isoliermaterial verfestigt bzw. ausgehärtet ist, ist der Isolierkörper 15 fertiggestellt. Das Schlauchstück kann dann entfernt werden, ebenso wie jedes andere, der Formbegrenzung dienende Bauelement. Ein Schlauchstück aus geeignetem Isoliermaterial könnte aber auch am Isolierkörper 15 belassen werden.

Der Isolierkörper 15 wird - wie bereits erwähnt - zweckmäßig entsprechend der inneren Kontur des Gehäuses 1 geformt.Grundsätzlich kann der Isolierkörper 15 aber auch eine andere geometrische Gestaltung haben, solange das Ende der Leitung 2 feuchtigkeitsdicht abgeschlossen ist und solange eine temperaturbedingte Ausdehnungsmöglichkeit besteht.

Das mit dem Isolierkörper 15 versehene Ende der Leitung 2 wird einschließlich angeschlossenem Bauteil 10 in das Gehäuse 1 geschoben, bis es seine aus den Fig. 2 und 3 ersichtliche Position einnimmt. In dieser Position ist der Grundkörper 13 des Klemmstücks 12 dicht am Gehäuse 1 anliegend in dasselbe eingefügt. Die Verbindung dieser beiden Teile kann noch durch äußere Krafteinwirkung auf das Gehäuse 1 verbessert werden, beispielsweise durch Pressen.

Abschließend wird der Schutzkörper 3 um das Ende des Gehäuses 1 und die aus demselben herausragende Leitung 2 herumgespritzt. Dabei wird ein Material verwendet, das mit dem Mantel 5 der Leitung 2 verschweißt. Ein solches Material ist beispielsweise Polyurethan. Der feste Sitz des Schutzkörpers 3 am Gehäuse 1 wird durch die Sicken 16 unterstützt.

## Patentansprüche

1. Anordnung zum Einführen des Endes einer geschirmten elektrischen Leitung (2) in ein metallisches Gehäuse (1), welche mindestens eine aus einem isolierten elektrischen Leiter bestehende Ader (6,7), einen die Ader (6,7) umgebenden, flexiblen metallischen Schirm (11) und einen darüber liegenden Mantel (5) aus Isoliermaterial aufweist, bei welcher der vom Mantel (5) befreite Schirm (11) an einem metallischen Klemmstück (12) festgelegt ist, das elektrisch gut leitenden Kontakt mit dem Gehäuse (1) hat, bei welcher das metallische Klemmstück (12) innerhalb des Gehäuses (1) angeordnet ist, in welchem der abisolierte Leiter der vom Mantel (5) befreiten Ader (6,7) an einer Kontaktstelle (8,9) an ein im Gehäuse (1) befindliches Bauteil (10) angeschlossen ist, bei welcher die Ader (6,7) einschließlich Leiter und Kontaktstelle (8,9) sowie die im Gehäuse (1) liegenden Teile des Klemmstücks (12) mit eingeklemmtem Schirm (11) in einen Isolierkörper (15) eingebettet sind und bei welcher um das Ende des Gehäuses (1) ein durch Spritzgießen erzeugter Schutzkörper (3) aus Isoliermaterial herumgeformt ist, der sich bis über die Leitung (2) erstreckt, **dadurch gekennzeichnet,**
- daß das Klemmstück (12) an der Stelle seiner größten radialen Abmessung mit seiner Umfangsfläche rundum dicht am Gehäuse (1) anliegt und
- daß der Schutzkörper (3) mit dem Mantel (5) der Leitung (2) verschweißt ist.

2. Anordnung nach Anspruch 1, dadurch gekennzeichnet, daß der Isolierkörper (15) lose im Gehäuse (1) angeordnet ist.

3. Anordnung nach Anspruch 1 oder 2, dadurch gekennzeichnet, daß das Klemmstück (12) aus einem dessen größte radiale Abmessung aufweisenden Grundkörper (13) mit konischem Ansatz und einem über den Ansatz schiebbaren Ring (14) besteht.

4. Anordnung nach einem der Ansprüche 1 bis 3, dadurch gekennzeichnet, daß das Gehäuse (1) an seiner äußeren Oberfläche in dem vom Schutzkörper (3) umschlossenen Bereich mindestens eine umlaufende Sicke (16) aufweist.

## Claims

1. Arrangement for introducing an end of a shielded electrical line (2) into a metal housing (1), having at least one core (6,7) composed of an electric conductor with insulation therearound, a flexible metal shield (11) surrounding the core (6,7) and a sheath (5) made of insulating material placed thereover, at an end of the electrical line (2) the sheath (5) is removed from a portion of the shield (11) which is affixed to a metal clamp (12) having good electrical contact to the housing (1) and being arranged within the housing (1), the insulation from an end portion of each electrical conductor is removed and a component (10) is connected to the end portion of each electrical conductor via a contact point (8,9) within the housing (1), an insulating body (15) imbedding the core (6,7), the portion of the shield (11), the end portion of each electrical conductor, each contact point (8,9) and parts of the metal clamp (12) and a protective cover (3) made of insulation material beeing molded around an end of the metal housing (1) and the shielded electrical line (2) extending therefrom,
**characterised in**
- that the metal clamp (12) at the position with its greatest dimension contacts the housing (1) with the complete circumferential surface in a thight manner and
- that the protective cover (3) is bonded to the sheath (5) of the shielded electrical line (2).

2. Arrangement as claimed in claim 1, **characterised in** that insulating body (15) is arranged in the metal housing (1) in a loose manner.

3. Arrangement as claimed in claim 1 or 2, **characterised in** that the metal clamp (12) comprises a base (13) having the greatest dimension and being provided with a conical extension and a ring (14) which can be pushed over the extension.

4. Arrangement as claimed in one of the claims 1 to 3, **characterised in** that the metal housing (1) has at least one crimp (16) on its external surface in the area which is covered by the protective cover (3).

## Revendications

1. Dispositif d'introduction de l'extrémité d'un câble électrique blindé (2) dans un boîtier métallique (1) composé au moins d'un fil constitué par un conducteur électrique isolé (6,7), d'un blindage (11) métallique enrobant et flexible et d'une gaine (5) de recouvrement en matériau isolant; où le blindage (11) dénudé de sa gaine (5) est fixé sur un crapaud métallique de blocage (12) assurant un bon contact électro-conducteur avec le boîtier (1); où le crapaud métallique de blocage (12) est situé à l'intérieur du boîtier (1); où le conducteur dénudé des fils (6,7), privés de leur gaine (5), est branché au point de contact (8,9) d'un composant (10) se trouvant à l'intérieur d'un boîtier (1); où les fils (6,7), conducteur et point de contact compris (8,9°, ainsi que les pièces du crapaud de blocage situé à l'intérieur du boîtier (1), avec blindage (11) bloqué, sont intégrés dans un bloc d'isolation (15) et où un bloc de protection (3) en matériau isolant est moulé par injection autour de l'extrémité du boîtier (1) tout en englobant le câble (2). Dispositif caractérisé par le fait
- que la surface périphérique du crapaud de blocage (12) est en contact étroit avec le boîtier (1) au niveau de sa plus grande dimension radiale et
- que le bloc de protection (3) fait bloc avec la gaine (5) du câble (2).

2. Dispositif conforme à l'exigence 1, caractérisé par le fait que le bloc d'isolation (15) est disposé librement à l'intérieur du boîtier (1).

3. Dispositif conforme à l'exigence 1 ou 2, caractérisé par le fait que le crapaud de blocage (12) est constitué par un bloc principal (13), en représentant la dimension radiale la plus importante, muni d'un embout conique et d'une bague (14) pouvant coulisser sur l'embout.

4. Dispositif conforme à l'une des exigence 1 à 3, caractérisé par le fait que le boîtier (1) présente sur sa surface externe au moins une bande renforcement (16) l'entourant au niveau du secteur englobé par le bloc de protection.
